# EUROPEAN PATENT APPLICATION

(11) **EP 4 738 478 A2**
(43) Date of publication of application: **06.05.2026**
(21) Application number: 25207744.1
(22) Date of filing: 09.10.2025
(51) Int. Cl.: H01M 4/86, H01M 8/00, H01M 8/0252, H01M 8/0256, H01M 8/124, H01M 4/88

(54) **METHOD FOR MANUFACTURING AN ELECTROLYTE-SUPPORTED FUEL CELL STRUCTURE**

(30) Priority: 16.10.2024 DE 102024130042
(71) Applicant: Airbus S.A.S., 31700 Blagnac (FR)
(72) Inventor: Rohr, Oliver, 85521 Ottobrunn (DE); Friedberger, Alois, 85521 Ottobrunn (DE)
(74) Representative: OTN Airbus SAS

(57) **Abstract**

A method (200) for manufacturing an electrolyte-supported fuel cell structure (100) is provided. The method (200) includes providing (210) a continuous electrolyte layer (110) with a first side (111) and a second side (112), coating (221) the first side (111) with an anode material (121) to form a continuous anode layer (120), and coating (222) the second side (112) with a cathode material (131) to form a continuous cathode layer (130). Portions of the anode layer (120) and cathode layer (130) are removed (231, 232) via laser ablation, creating separated anode and cathode sections. Through holes (113) are created (240) in the electrolyte layer (110) coinciding with areas where the anode or cathode layers have been removed. Conductive material (160) is arranged in the through holes to connect anode and cathode sections, thereby forming a serial connection between corresponding fuel cell segments.

## Description

### TECHNICAL FIELD

The present disclosure relates to method for manufacturing fuel cell structures in general, and in particular to a method for manufacturing an electrolyte-supported fuel cell structure comprising multiple fuel cells that are supported by a common electrolyte layer and connected in series with each other.

### TECHNICAL BACKGROUND

Because of the technical progress, and because of their environmentally friendly creation of electrical energy, fuel cells are becoming increasingly popular as alternative energy sources. However, planar solid oxide fuel cells (SOFCs), for example, offer a relatively low gravimetric power density and are as such currently mainly developed for stationary applications. In mobile applications, and for aircrafts in particular, reduction of weight is of paramount importance. Therefore, in order to keep the weight low while still providing the necessary power, increasing the gravimetric power density (being the power per weight unit) is desired.

In typical planar SOFCs having an oxide conducting ceramic electrolyte covered with a negative electrode (anode) on the fuel side and with a positive electrode (cathode) on the oxidizer side, metallic interconnectors at the outsides of each cell are used to electrically connect each cell to a neighboring cell and to separate the fuel from the oxidizer channel (air gas channel) of two neighboring cells, in order to build a fuel cell stack. The electrical current thereby is transferred in a perpendicular direction of the cell area. The interconnectors can take up to 70% of the total weight of such a planar stack.

Although known tubular cell designs, for example, do not rely on such heavy interconnectors and therefore offer optimization potential with regard to the gravimetric power density, such solutions implement current collection in the longitudinal or circular direction and along the in-plane cross section of the cell. This current collection mechanism causes higher current losses compared to planar concepts (partly because of the long distances the electrons have to travel) and with this low gravimetric power densities.

Also, integrated planar SOFC concepts are known in the art, in which single cell strips are arranged in a common plane onto a porous support substrate and interconnected in series by electrical interconnectors. Such solutions offer advantages with regard to the gravimetric power density because heavy interconnector plates can be avoided. However, the manufacturing process of the integrated planar SOFC concepts requires that the porous support layer is produced prior to the functional layers, which results in difficulties with respect to applying the appropriate sintering temperatures, which furthermore can reduce the performance and durability of the cell. Further, the thermal expansion of the different layers result in an increased risk of delamination and cracking at the interface between two cell segments.

### DESCRIPTION

It is an objective to provide a method for manufacturing an integrated electrolyte-supported fuel cell structure that increases manufacturing precision, is cost efficient, leads to low mechanical degradation and increases lifetime of the fuel cell structure, and that is highly reproducible.

This objective is solved by the subject matter of the independent claims. Further embodiments are described in the dependent claims as well as in the following description.

According to a first aspect, a method for manufacturing an electrolyte-supported fuel cell structure is provided. The method comprises providing a continuous electrolyte layer having a first side and a second side. The method further comprises coating the first side of the continuous electrolyte layer with an anode material, such that a continuous anode layer at least partially covers the first side of the electrolyte layer, and coating the second side of the continuous electrolyte layer with a cathode material, such that a continuous cathode layer at least partially covers the second side of the electrolyte layer. The method then comprises removing portions of the anode layer via laser ablation, such that at least a first anode section and a second anode section that are completely separated from each other but that are neighboring each other on the first side of the electrolyte layer are build, and removing portions of the cathode layer via laser ablation, such that at least a first cathode section and a second cathode section that are completely separated from each other but that are neighboring each other on the first side of the electrolyte layer are build. The method further comprises creating through holes through the electrolyte layer that at least partially coincide with areas, in which the anode layer and/or the cathode layer has been removed, and arranging a conductive material within the through holes, such that the conductive material connects the first anode section with the second cathode section, or such that the conductive material connects the second anode section with the first cathode section, thereby building a serial connection between corresponding fuel cell segments.

The method enables manufacturing multiple electrodes in a networking configuration onto a single and continuous electrolyte layer which also provides the mechanical support for the fuel cells. The continuous electrolyte layer builds a center layer of the fuel cell structure. The individual anodes and cathodes of individual fuel cells are arranged side-by-side on opposite sides of the electrolyte layer and are interconnected with each other through the conductive material passing through the electrolyte layer in a serial connection. In particular, the single fuel cell segments are not stacked on top of each other, like multiple cells of, e.g., a planar fuel cell stack, but are rather arranged side-by-side with each other in a common plane. Therefore, the heavy-weight bipolar plates between the single fuel cells in a regular fuel cell stack can be omitted, thereby reducing weight of the structure. The electrolyte layer in particular is a coherent layer, so that every point on the electrolyte layer is in some way connected to every other point on the electrolyte layer. In other words, there is no position on the electrolyte layer that completely separates a first section of the electrolyte layer from a second section of the electrolyte layer.

The electrolyte-supported fuel cell structure manufactured by the disclosed method may, for example, be a solid oxide fuel cell (SOFC). However, any other suitable types of fuel cells are also conceivable. The disclosed method allows for a precise, low cost, and highly reproducible manufacturing of such fuel cell structures that further improves mechanical stability and reduced the mechanical degradation, leading to increased lifetime of the fuel cell structure.

The method starts with providing the continuous electrolyte layer, which may, for example, be a ceramic element made of electrolyte material. In principle, any shape of the electrolyte layer is conceivable, such as flat shapes, tubular shapes, gyroid structures, etc. Gyroid structure have the advantage that not a large number of tubes need to be assembled to build a high power fuel cell system. Instead, only a few complex gyroid structures can be sufficient. In a preferred embodiment, the continuous electrolyte layer is a tubular structure. The electrolyte layer may, for example, be made from scandium stabilized zirconium oxide or any other suitable material. The electrolyte layer may, for example, be produced using a CIM (ceramic injection molding) process known in the art or any other suitable process.

The electrolyte layer, in general, has a first side and a second side. In tubular shapes, these sides may correspond to the inner side and the outer side of a hollow tube where the electrolyte material fully encloses a tubular (i.e., cylindrical) cavity along a circumference of the tube.

After providing the continuous electrolyte layer, the method comprises coating the first side with an anode material, such that the first side is at least partially covered with the anode material, which therefore builds a continuous anode layer covering the first side of the electrolyte layer. Further, the method comprises coating the second side with a cathode material in the same manner, such that the second side is at least partially covered with the cathode material to build a continuous cathode layer. That the anode material and the cathode material (herein also collectively referred to as "electrode material" "at least partially" cover the corresponding side of the electrolyte layer means that the anode and cathode layers do not necessarily have to cover the whole surface of the corresponding side. For example, it is conceivable that a side portion of the electrolyte layer is not covered. However, in any case, the anode and cathode layers are continuous in the same way as the electrolyte layer. Preferably, however, the whole surface of the corresponding side of the electrolyte layer is covered by the corresponding electrode material after the coating steps of the method. Coating of the first side and the second side of the electrolyte layer with the corresponding electrode material may either be done concurrently or consecutively. The coating steps may, for example, be done using a slurry dip coating process, a spray coating process, or any other suitable process. In order to ensure that only parts of the electrolyte layer that are to be coated by the corresponding electrode material (anode material or cathode material) are coated, parts/sections of the electrolyte layer, at which the corresponding electrode material shall not be deposited may be masked with a masking material that either prevents that the anode material attaches to the electrolyte layer at this parts/sections in the first place or that can be easily removed from them afterwards together with the corresponding electrode material, for example by a certain chemical process. In particular, when the first side is coated with the anode material, the second side may be masked to avoid depositing the anode material onto the second side. Similarly, when the second side of the electrolyte layer is coated with the cathode material, the first side may be masked accordingly, such that the cathode material is not deposited onto the first side.

The anode material may, for example, be NiO-8YSZ (a composite material consisting of nickel oxide (NiO) and 8 mol-% yttria-stabilized zirconia (8YSZ)). The cathode material may, for example, be LSC (Lanthanum Strontium Cobaltite, such as La_{0.6}Sr_{0.4}CoO₃). However, other materials are conceivable and possible, too.

After coating the first side and the second side of the electrolyte layer with the anode layer and the cathode layer, each of these electrode layers is segmented, such that individual electrode sections (i.e., the first and second anode sections and the first and second cathode sections) emerge. In other words, the anode layer and the cathode layer are each interrupted such that at least two individual sections emerge that are neighboring each other on the corresponding side of the electrolyte layer but that are not in contact with each other. In particular this segmentation is achieved by laser ablation.

Laser ablation is a process where a high-powered laser is used to remove material from a solid surface by irradiating it. The intense energy from the laser heats and vaporizes the material (i.e., the anode and cathode material at the locations, where the laser impinges upon these materials), effectively removing layers of it in a highly controlled manner. The laser beam, which can be in short pulses or continuous, is focused onto a small spot on the surface of the material. The laser beam or individual pulses exhibit a very high energy density, such that a lot of energy is concentrated on a very small area. The surface absorbs the energy from the laser. Depending on the material and the laser wavelength, the energy can penetrate to different depths, but usually it only affects the surface. In order to ablate thicker material depths as well as greater material in-plane widths, the laser can scan (i.e., move over) the region of the layer which is to be removed. The absorbed energy causes the material (i.e., the anode material and cathode material) to heat up rapidly. As a result, the material either melts, directly vaporizes, or is transformed into a plasma, which consists of ionized atoms and molecules. As the material heats up and turns into vapor or plasma, it is ejected from the surface, effectively removing a thin layer of material. This process can be highly precise, making laser ablation ideal for microfabrication or selective material removal.

In particular, in the disclosed method, portions of the anode layer and the cathode layer are removed by laser ablation in regions of the layer, such that the remaining sections of the anode layer and the cathode layer are substantially opposite to each other on the first side and second side of the electrolyte layer. In this way, the first anode section and the first cathode section together with the intermediate part of the electrolyte layer build a first fuel cell, and the second anode section together with the second cathode section and the intermediate part of the electrolyte layer build a second fuel cell. Removing the portions of the anode layer and the cathode layer can in particular occur in lines along the first side and the second side of the electrolyte layer. For example, in tubular designs of the fuel cell structure, these lines can run along the circumferential direction of the tube. Such lines may herein also be referred to as segmentation rings. The fuel cell structure herein is mainly discussed with regard to tubular structures. However, other shapes are conceivable, too. Therefore, when used herein, the term "segmentation ring" also covers straight lines or other lines on the electrolyte layer that separate individual electrode segments from each other. The lines are arranged at least partially opposite to each other or immediately neighboring each other with regard to the electrolyte layer, in order to allow interconnecting individual fuel cells build by the segments, as described below.

It is to be appreciated that, although only a first and second fuel cell (i.e., the first anode section and first cathode section, and the second anode section and the second cathode section) are described herein, the fuel cell structure may have more than two such fuel cells. This may be achieved, for example, by removing more than one line of the anode layer and the cathode layer.

In order to interconnect the individual fuel cell sections, through holes are created through the electrolyte layer in the portions, where the corresponding electrode material has been removed. Because these portions are substantially opposite to each other, this allows a serial connection of an anode section with a neighboring (on the electrolyte layer but on opposite sides of the electrolyte layer) cathode section by arranging an electrical interconnector within the through holes. Creating the through holes can, for example, be achieved by creating blind holes by laser drilling or in any other suitable way. Such blind holes may, for example, comprise a diameter between 100 µm and 300 µm, preferably between 150 µm and 250 µm, and most preferably between 180 µm and 210 µm (for example 200 µm). At least one such through hole but also multiple through holes may be created between each neighboring anode and cathode sections.

Subsequently, an electrically conductive material is arranged within the through holes, that interconnects each anode section with a neighboring cathode section on the opposite side of the electrolyte layer. The conductive material may, e.g., be a metal material such as platinum with a high degree of gas tightness, Nickel (Ni), Crofer, or LSC. Crofer is a type of high-temperature ferritic steel specifically designed for use in solid oxide fuel cells (SOFCs) and similar high-temperature electrochemical systems. Its key feature is a high resistance to oxidation and corrosion at elevated temperatures, making it suitable for environments where such conditions are prevalent. Crofer is primarily a ferritic stainless steel, which means it contains iron and chromium as the main elements. It may include small amounts of other alloying elements such as titanium, manganese, and silicon to enhance its performance. The conductive material may be arranged within the through holes, such that the through holes are completely filled with the conductive material or, alternatively, such that only the through hole wall is covered (i.e., metallized) with the conductive material. It has to be ensured, that the conductive material connects the corresponding anode section with the corresponding cathode section without short circuiting individual anode section with each other and cathode sections with each other.

The electrically conductive material may, for example, be arranged within the through holes by galvanic deposition or physical vapor deposition (PVD).

Optionally, in particular in alternatives of the method where the through holes are not completely filled with the conductive material, the remaining parts of the through holes can be filled with a gas tight sealing such as a glass sealing in order to increase the gas tightness.

In particular in tubular shapes, because of the serial connection of the individual fuel cell segments, one electrical contact for current collection on the inner tube wall and one electrical contact for current collection on the outer tube wall arises. The concept described herein for electrical interconnection between individual fuel cell segments may also be utilized to bring the inner contact to the outer side of the tube as well. This can drastically simplify the electrical connection of individual fuel cell structures / tubes. For example, on each tube end, one metallic ring can be provided on the outer side such that both end electrodes of the serial arrangement (i.e., the first anode and the last cathode or vice versa) can easily be connected, similar to a battery.

According to an embodiment, providing the continuous electrolyte layer comprises providing the continuous electrolyte layer in a tubular shape building a tube having an inner side and an outer side, wherein the first side of the electrolyte layer is the inner side of the tube and wherein the second side of the continuous electrolyte layer is the outer side of the tube or vice versa.

Such a tube may, for example, have an inner diameter between 1 mm to 20 mm, preferably between 3 mm to 15 mm, and most preferably between 5 mm to 10 mm. The tube length may be in the range of 30 mm to 80 mm, preferably between 40 mm to 70 mm, and most preferably between 50 mm to 60 mm. The tube may, for example, have a wall thickness in one of the following ranges: between 100 µm to 600 µm, between 200 µm to 550 µm, or between 250 µm to 500 µm. Preferably, the wall thickness is 100 µm. However, these dimensions are only exemplary in nature and any other suitable dimensions may be used.

Using a tubular shape for the electrolyte layer leads to a tubular fuel cell structure, because the anode layer and the cathode layer are coated onto the inner and outer sides of the tube. The inner side of the tube may, for example, be used as a fuel channel to provide fuel such as hydrogen to the fuel cell structure and the outer side of the tube may be used to provide an oxidizer such as oxygen to the fuel cell structure. However, depending on the arrangement of the anode layer and the cathode layer on the inner side or outer side of the tube, the inner side may also be used to provide the oxidizer, and the outer side may be used to provide the fuel.

The tubular shape is in particular preferred because it increases the gravimetric power density.

According to another embodiment, removing the portions of the anode layer and removing the portions of the cathode layer each occurs in at least one ring around the circumferential direction of the tube, such that the rings in which the anode layer and the cathode layer are removed are at least partially opposing each other on opposite sides of the tube. This arrangement has already been described above (segmentation rings).

According to another embodiment, removing the portions of the corresponding one of the anode layer or the cathode layer that is arranged at the inner side of the tube is performed by inserting a carrier having a mirror mounted thereon into the tube and illuminating the mirror with a laser beam. The mirror is configured to direct the laser beam onto the inner side of the tube at an incident angle between 5 degree and 175 degree, especially between 45 degree and 90 degree.

In particular if the tubular shape comprises small dimensions, such as an inner diameter of less than 2 cm, removing the portions of the electrode layer on the inner side of the tube can be a challenge due to accessibility. The inner diameter of the tube may not be sufficient to directly illuminate the desired portions from the outside with a laser beam for laser ablation under the necessary incident angle. Therefore, a carrier-mirror arrangement is used in this embodiment. In particular, a small mirror, that is small enough to fit into the inner side of the tube is mounted onto an end of a carrier (such as a small shaft or similar). The mirror is angled such that it can be illuminated substantially parallel to the longitudinal extension (or at least under an angle sufficiently small to illuminate to whole length of the tube) from the outside of the tube and such that the incident laser beam impinges onto the inner side of the tube under an incident angle that is large/steep enough to achieve the necessary accuracy and/or removal rate. Ideally, the laser beam should impinge upon the inner side of the tube perpendicular or under a specified angle. In order to create the segmentation rings describes herein further above, the mirror (or carrier-mirror arrangement) and/or the tube may be rotated in order to scan the corresponding areas with a laser beam and remove the corresponding segmentation rings of electrode material from the inner side of the tube by laser ablation. Further, the mirror (or carrier-mirror arrangement) and the tube can be moved laterally with regard to each other to define a certain width of the corresponding segmentation ring (where the electrode material is removed by laser ablation).

Further, optionally, an exhaust or suction system may be used to remove debris and to reduce the risk of re-deposition.

According to another embodiment, removing the portions of the anode layer and/or removing the portions of the cathode layer by laser ablation is stopped as soon as the electrolyte layer is exposed, in order to at least largely avoid removal of material of the electrolyte layer.

For this, the corresponding surface may, for example, be visually observed (either by the naked eye or via a camera arrangement or by any other suitable means). As soon as the electrolyte layer or identifiable features of the electrolyte layer becomes visible at the corresponding location, laser ablation is stopped. However, laser ablation may also be stopped after a predetermined period of time has lapsed which is known to be suitable to fully ablate the corresponding electrode material while at least substantially leaving the electrolyte material unablated. Another possibility is to monitor emission spectra, as described further below.

According to another embodiment, removing the portions of the anode layer and/or removing the portions of the cathode layer is performed for a predetermined period of time.

Such a predetermined period of time may, for example, be determined depending on at least one of the layer thicknesses of the electrode layer (anode and cathode layers), the materials of these layers and their properties in response to laser radiation, and the laser settings (power, intensity, etc.) and other possible characteristics influencing the necessary irradiation time for complete laser ablation of the electrode layers at the corresponding locations without removing parts of the electrolyte layer. The predetermined period of time may, for example, be determined by a physical model of the corresponding layer structure or may be based on prior runs of the procedure (or by using test or model fuel cell structures) and inspection of the result. However, the necessary time for laser ablation may also be determined by any other suitable means and may, for example, also be determined using machine learning or artificial intelligence methods based on prior training data that is used for training a corresponding neural network. Although the laser ablation should ideally stop at exactly the moment when all of the desired parts of the electrode layers are removed without removing any of the electrolyte layer, a small amount, such as a few percent, of the electrolyte thickness may also be allowed to be removed during the laser ablation.

According to another embodiment, the electrolyte layer and the corresponding one of the anode layer and the cathode layer exhibit distinct emission spectra. Removing the portions of the anode layer and/or removing the portions of the cathode layer, respectively, further comprises monitoring the emission spectra during laser ablation and stopping the laser ablation process when a change in the detected emission spectrum indicates the ablation process has reached the electrolyte layer and therefore is complete.

**In** general, every material comprises certain absorption, transmission and reflection properties for electromagnetic waves, such as light. By using an electrolyte material having a distinct emission spectrum from the used anode material and/or cathode material, these properties may be utilized to detect, when the corresponding portions of the corresponding one of the anode layer and/or the cathode layer have been removed. For example, if the anode material (or cathode material) and the electrolyte material comprise different reflection properties, the reflection of the laser light from these material is different from each other. Hence, when the corresponding portions to be removed have been completely removed by laser ablation, such that the electrolyte layer is no longer covered by the corresponding electrode layer at the desired portions, a detected light emission changes. A corresponding sensor, such as a CCD sensor or any other suitable optical sensor, may be used to detect this change in the emission spectrum and therefore to detect, when to stop the laser ablation process, so that the electrolyte layer ideally is not ablated. Such a sensor may, in corresponding embodiments utilizing a carrier-mirror arrangement, as described herein for ablating a portion of an inner layer of a tube, also be mounted to the carrier that supports the mirror. However, this is only one example. Any positioning of the optical sensor is possible, as long as the sensor can detect the emission spectra.

Alternatively (or additionally) additives in low quantity may be added (doped) to the electrode materials with the aim of the additives showing strong and characteristic emission spectra.

This can significantly improve the endpoint detection for the laser ablation of the portions of the anode layer and the cathode layer.

The endpoint detection based on emission spectra may optionally be combined with the time based approach for the laser ablation described further above.

According to another embodiment, removing the portions of the anode layer or the cathode layer, respectively, is performed by scanning corresponding regions of the respective one of the anode layer and the cathode layer with a laser beam.

Scanning thereby means that the laser beam is moved/swept over the corresponding portions of the corresponding electrode layer, for example in predetermined paths (such as line by line), until the corresponding portions are completely removed by the laser beam.

According to another embodiment, creating the through holes through the electrolyte layer is performed via laser drilling.

Laser drilling is a precise and high-speed process used to create holes in various materials using focused laser beams that is similar to laser ablation but that is used to drill holes instead of ablating material in relatively larger surfaces. In general, the process involves directing a laser onto a material's surface (here, onto the surface of the electrolyte layer at the locations, where the anode layer and/or cathode layer has been removed beforehand by laser ablation). The laser energy is absorbed and converted into heat, causing the material to melt, vaporize, or be ejected, creating a hole. A high-intensity laser beam is focused onto a small spot on the material. The intense energy causes rapid heating of the material. The concentrated heat either melts or vaporizes the material, or it ejects it in the form of molten droplets. This process forms a hole, which may afterwards be used to interconnect the neighboring anode and cathode sections through the electrolyte layer, as described herein. Laser drilling can, for example, be one of percussion drilling, trepanning, helical drilling, or any other laser drilling process. In percussion drilling methods, the laser repeatedly pulses at a specific point to create a hole. This is in particular useful for creating small, deep holes. In trepanning methods, the laser beam moves in a circular path to cut larger holes. Helical drilling comprises the laser following a helical path to gradually remove layers of material. This is in particular useful for deep holes with precise control. Laser drilling can create very small holes with high accuracy, down to micrometer-level precision. The process is rapid, making it ideal for high-volume production. It can, in general, be used on a wide range of materials, including metals, ceramics, plastics, and composites. Laser drilling is particularly advantageous when extreme precision, minimal thermal damage, or micro-sized holes are needed.

According to another embodiment, creating the through holes through the electrolyte layer comprises coating the arrangement comprising the electrolyte layer, the anode layer, and the cathode layer with a photoresist by dip coating or spray coating after removing the portions of the anode layer and the cathode layer, laser structuring the photoresist on at least one of the sides of the arrangement, and laser drilling the through holes on the at least one side of the arrangement that has been laser structured.

A photoresist is a material sensitive to light or laser energy that helps to define where a laser will remove material when illuminated. Further, the photoresist is also used to define, where the conductive material, later arranged within the through holes (e.g., by galvanic deposition or PVD) attaches to the structure and stays there. In particular, when parts of the conductive material cover an intermediate thin layer of the photoresist after galvanic deposition or PVD, when the photoresist is later removed, removing the intermediate thin layer also removes the corresponding unwanted parts of the conductive material.

Before laser drilling the through holes, the whole arrangement of the electrolyte layer, the already segmented anode layer (i.e., the anode layer, where the segmentation rings have been removed by layer ablation), and the already segmented cathode layer, is coated with a photoresist. This may in general be done by any suitable means, such as by dip coating (submerging the structure into the photoresist) or spray coating (spraying the photoresist onto the structure).

The photoresist itself is then structured using a laser, in order to define the regions, where the conductive material is to be present and in order to avoid depositing the conductive material onto regions, where it is not desired (e.g., to avoid short circuits between individual fuel cell segments). Structuring means shaping the photoresist by laser light or adjusting its absorption characteristics in order to define the corresponding regions.

After structuring, the through holes may be drilled using a laser, as described above. The through holes are thereby drilled, such that the electrolyte material is completely removed in the region of the through whole but without removing/drilling or damaging the opposite electrode layer, which may in some designs at least partly overlap the segmentation ring of the electrode layer, from which side the through hole is drilled. For example, if the through hole is drilled from the anode side, the corresponding segmentation ring (or more generally "portion") at the anode side may be at least partially shifted from the corresponding segmentation ring (or "portion") at the cathode side, such that the cathode material overlaps the segmentation ring at the anode side. Laser drilling is then stopped, as soon as the electrode material at the opposite side is reached (which may be detected in the same way as described above with regard to the laser ablation, e.g., time based, based on emission spectra, etc.). However, the segmentation rings at the anode side and the cathode side may in some designs also be perfectly aligned. In this instance, the through holes are drilled, until the photoresist at the opposite side is reached.

After arranging the conductive material within the through holes (e.g., by galvanic deposition or PVD, as described below), the photoresist may then be stripped from the arrangement, for example chemically using acetone or any other suitable solvent or in any other suitable way. Stripping the photoresist thereby also "washes away" the conductive material from undesired regions, leaving the conductive material designed exactly such that it interconnects neighboring anode sections and cathode sections without causing a short circuit, i.e., to interconnect neighboring fuel cell segments in series.

It should be appreciated, that the steps of laser structuring of the photoresist and laser drilling of the through holes, may also be interchanged in order.

According to another embodiment, arranging the conductive material within the through holes is performed by galvanic deposition and/or physical vapor deposition, PVD.

According to another embodiment, coating the first side of the electrolyte layer with the anode material and/or coating the second side of the electrolyte layer with the cathode material is carried out by slurry dip coating.

Slurry dip coating is a process where an object (here the electrolyte layer) is dipped into a slurry mixture, which consists of solid particles suspended in a liquid medium, and then withdrawn, allowing a thin layer of the slurry to coat the surface of the object. A mixture of fine solid particles (such as ceramic powders or metals, here the anode material and the cathode material) is suspended in a liquid, typically water or an organic solvent. Binders and additives may be included to ensure uniform coating and adhesion. The electrolyte layer is then immersed into the slurry for a certain amount of time, allowing the liquid to flow around the surface and coat it uniformly. After dipping, the electrolyte layer is withdrawn at a controlled speed, leaving a layer of the slurry on its surface. The thickness of this coating can be controlled by factors such as withdrawal speed, slurry viscosity, and solids concentration. The coated electrolyte layer is then dried to remove the liquid, leaving behind a solid layer of particles. If needed, the electrolyte layer can also be heated (fired or sintered) to bind the particles together and form a solid, uniform coating.

According to another embodiment, the method further comprises coating the first side and/or the second side of the electrolyte layer with a barrier layer prior to coating the corresponding one of the first side and the second side with the anode material or the cathode material, respectively.

Such a barrier layer may be produced similar to the anode layer and the cathode layer. The barrier layer may, for example, be layer consisting of GDC (gadolinium doped cerium) and may have a thickness of, e.g., 5 to 10 µm, or even thinner, e.g., 2 µm to 4 µm.

According to another embodiment, the laser ablation is adjusted so as to soften edges at the end of the laser ablation processes, in order to avoid or at least reduce mechanical stress in the electrolyte layer.

In general, although stopping at exactly the interface between electrode and electrolyte would be ideal for the laser ablation, in reality, this cannot always be perfectly ensured. Rather, usually at least some of the electrolyte material may also be removed at the end of the laser ablation process. Since steep edges in any material are weak points reducing mechanical strength. Therefore, it may be desirable to avoid such steep edges which would reduce mechanical stability of the electrolyte layer.

In general, the segmentation rings (or in general "portions") of the electrode layers to be removed via laser ablation have a width considerably larger than the laser diameter. Softening the edges can then, for example, be achieved by using a "wobbling" laser beam and illuminating the edges with the laser beam for a shorter period of time than the center sections of the segmentation rings. This leads to deeper removal of material in the center sections than at the edges, thereby creating a more continuous transition at the edges. This reduces the risk of potential weak points that decrease mechanical stability. The laser may, during a first time interval in which the outer layers are removed, uniformly illuminate the whole width of the segmentation rings. In a second time interval when reaching the end of the laser ablation process of the corresponding segmentation ring, illumination may be transitioned to the scheme described above, i.e., illuminating the edges with the wobbling laser for shorter time periods.

According to another embodiment, removing the portions of the anode layer and/or the cathode layer is carried out by directing a laser beam onto the corresponding surface via an optical fiber having a cleaved end and/or a micro lens arranged at its end.

In general, in particular in tubular shapes of the fuel cell structure, illuminating the inner side of the tube may be challenging, as described further above. Although at least in some configurations, inserting a mirror into the inner side and illuminating the mirror with the laser from the outside may be feasible, in particular with very small diameters, this may be challenging because the laser is focused onto the surface of the inner electrode layer and (because of the small dimensions of the tube) the mirror is arranged relatively close to this surface. This may lead to high thermal transfer to the mirror which may damage it. Therefore, instead of using a mirror, an optical fiber may be used. Such an optical fiber is in particular useful with fuel cell structures having very small dimensions. The laser light is coupled into the fiber from the outside. The end of the optical fiber, that is directed to the surface to be ablated, may be cleaved, i.e., cut at a certain angle (such as 45 degree, for example) and/or a micro lens arrangement may be used/arranged at this end. In particular in tubular shapes, this allows to insert the fiber relatively straight into the tube while still enabling illuminating the inner side of the tube at the necessary steep angle for layer ablation.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic view of a tubular electrolyte layer of an electrolyte supported fuel cell structure, obtainable with the disclosed method.
- **Fig. 2**: a schematic cut view of an electrolyte-supported fuel cell structure showing a first fuel cell and a second fuel cell connected in series, obtainable with the disclosed method.
- **Fig. 3**: a schematic view of tubular fuel cell structure in three stages during the method, namely electrolyte layer alone (left), electrolyte layer coated with cathode layer (middle), and electrolyte layer coated with segmented cathode layer by utilizing laser ablation (right).
- **Fig. 4**: illustrates a problem that may arise in laser ablation of portions of the electrode layer of the inner side of a tubular fuel cell structure.
- **Fig. 5**: schematically illustrates a solution to the problem shown in Fig. 4 by using a mirror arrangement.
- **Fig. 6**: a schematic view of an ideal situation, in which laser ablation of the portions of the electrode layers is perfectly timed to fully remove the portion of the electrode layer while avoiding removing material of the electrolyte layer.
- **Fig. 7**: a schematic view of a more realistic situation of laser ablation, in which some material of the electrolyte layer is removed, too, leading to sharp edges and therefore weak points in the electrolyte layer.
- **Fig. 8**: a schematic view of a solution of the problem shown in Fig. 7.
- **Fig. 9**: a schematic exemplary process flow for the method steps of creating through holes through the electrolyte layer and filling the through holes with an electrically conductive material.
- **Fig. 10**: an alternative for arranging an electrically conductive material within the through holes in the electrolyte layer, where the electrically conductive material does not fill the through holes but only covers the inner walls.
- **Fig. 11**: a flowchart of a method for manufacturing an electrolyte-supported fuel cell structure.

### DETAILLED DESCRIPTION

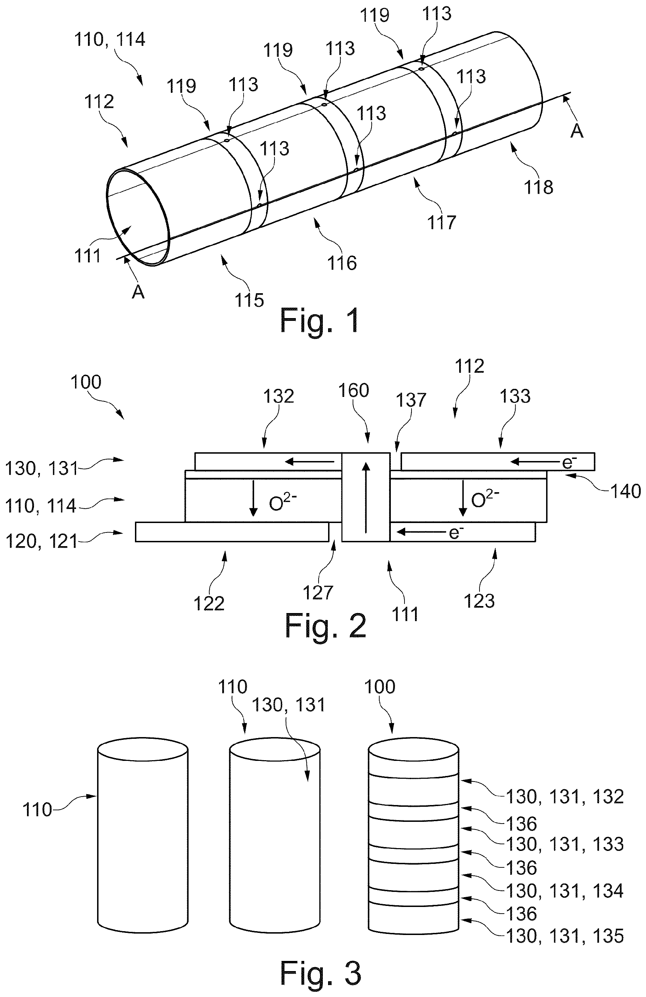

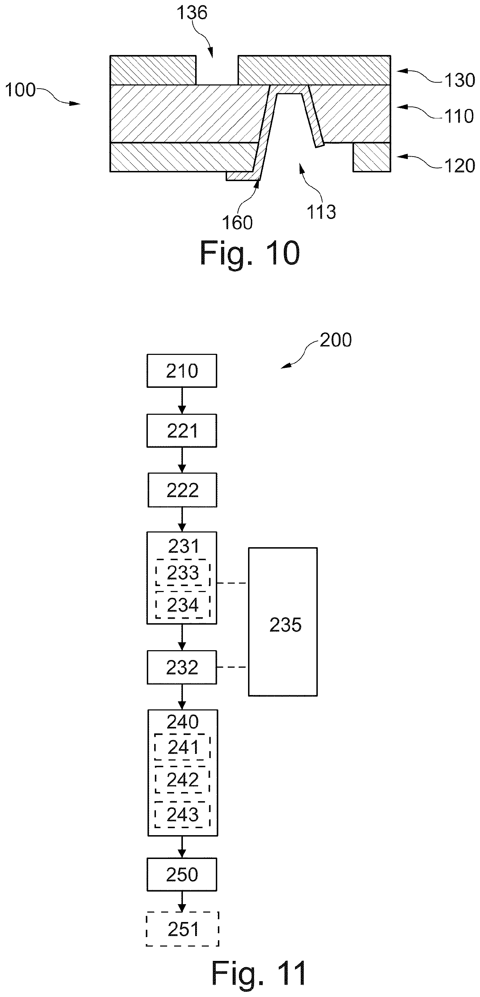

The discloses method will in the following be described with regard to a fuel cell structure 100, in particular an electrolyte-supported fuel cell structure 100, that is obtainable by the disclosed method. Figs. 1 to 9 show the fuel cell structure 100 (or parts of it) at different stages during the method 200 (Fig. 11). When referring to reference signs of the method (reference signs 200 and higher), these reference signs are shown in Fig. 11. The method steps are in part described concurrently with the resulting structures in the following

The method 200 starts with providing an electrolyte layer 110 in method step 210 (Fig. 11).

Fig. 1 shows a tubular electrolyte layer 110 as an example for such an electrolyte layer 110, which is a continuous electrolyte layer 110, as described herein in detail further above, having a first (or inner) side 111 and a second (or outer) side 112. Although the present disclosure mainly focusses on tubular fuel cell structures, it should be appreciated, that in principle any other shapes, such as flat or gyroid structures, are conceivable, too. The manufactured fuel cell structure 100 may, in a non-limiting example, be a solid oxide fuel cell (SOFC) and the electrolyte layer 110 may, for example, comprise a corresponding ceramic electrolyte material 114, such as, for example, scandium-stabilized zirconium oxide or yttria-stabilized zirconium. The electrolyte layer 110 of Fig. 1 is a hollow tube that is completely closed in a circumferential direction of the tube. Fig. 1 also schematically illustrates a first section 115, a second section 116, a third section 117 and a fourth section 118, which later on correspond to individual fuel cells, that are connected in series. Also, Fig. 1 schematically illustrates ablation sections 119 of the second (outer) side 112 of the electrolyte layer, which illustrate areas along the longitudinal extension of the electrolyte layer 110, at which the cathode layer 130 (see Fig. 2) later is removed by laser ablation as segmentations rings along the circumference of the tube, to build individual cathode sections 132 to 135 (see Figs. 2 and 3). At similar section (not shown in Fig. 1) at the inner side 111 of the tube, that are substantially opposite to the shown ablation sections 119 at the outer side 112 of the tube, portions of an anode layer 120 (see Fig. 2) are later on removed by laser ablation as well. These removed sections of the electrode layers 120, 130 are herein also referred to as segmentation rings. Fig. 1 also schematically illustrates through holes 113. It should be appreciated that these through holes 113, although shown in Fig. 1, are not provided within the electrolyte layer 110 at this stage of the method 200 but, as described further below, only after the anode layer 120 (see Fig. 2) and the cathode layer 130 (see Fig. 2) have been segmented. In general, the in Fig. 1 schematically illustrated sections 115, 116, 117, 118, ablation sections 119, and through holes 113 are not visible on the pure electrolyte layer 110 in this stage of the method 200 but are only illustrated in Fig. 1 to clarify the next steps of the method 200. In this sense, the corresponding markings in Fig. 1 are rather to be understood as planning areas.

Fig. 2 shows a schematic cross sectional view of a fuel cell structure 100, as achievable by the disclosed method 200, at a location, where through holes 113 are present (cut line A-A in Fig. 1). The fuel cell structure 100 comprises an anode layer 120 comprising an anode material 121, the electrolyte layer 110, a cathode layer 130 comprising a cathode material 131, and an electrically conductive material 160. The anode layer 120 and the cathode layer 130 in Fig. 2 have been segmented to build individual fuel cell sections. Fig. 2 shows a first anode section 122 that is opposite a first cathode section 132 and a second anode section 123 that is opposite a second cathode section 133. The first anode section 122, the first cathode section 132 and the intermediate portion of the electrolyte layer 110 build a first fuel cell. The second anode section 123, the second cathode section 133 and the intermediate electrolyte layer 110 build a second fuel cell. The section cathode section 133 is further separated from the electrically conductive material 160 by a cathode gap 137. Further, the first anode section 122 is separated from the electrically conductive material 160 by an anode gap 127. The second anode section 123 is connected to the first cathode section 132 by means of the electrically conductive material 160, which is arranged within one of the through holes 113, which, in turn, is arranged in one of the segmentation rings illustrated for example in Figs. 1 and 3 that run along the whole circumference of the tube. Hence, the first fuel cell and the second fuel cell are connected in series by means of the electrically conductive material 160. Further, Fig. 2 shows an optional barrier layer 140, as described herein further above. It should be appreciated that, although in Fig. 2 only two fuel cells are shown, the fuel cell structure 100 may comprise any number of fuel cells connected in series. The corresponding connections scheme is then repeated between any two neighboring fuel cells.

Fig. 3 shows a schematic view of tubular fuel cell structure 100 in three unfinished stages during the method 200, namely electrolyte layer 110 alone (left), electrolyte layer 110 coated with cathode layer 130 (middle), and electrolyte layer coated with segmented cathode layer 130 by utilizing laser ablation (right). As described above, the electrolyte layer 110 (such as the one shown in Fig. 1) is provided in step 210. This corresponds to the schematically illustrated electrolyte layer on the left side of Fig. 3. In a next step 222, the second (outer side) 112 of the electrolyte layer 110 is coated with an electrolyte material 131 to build a continuous cathode layer 130. Similarly, the first (inner) side 111 of the electrolyte layer 110 is coated in a method step 221 with an anode material 121 (not shown in Fig. 3) to build a continuous anode layer 120 (not shown in Fig. 3). Method steps 221 and 222 may occur concurrently or consecutively. The corresponding sides 111, 112 of the electrolyte layer 110 may, for example, be coated by spray coating or slurry dip coating, as described further above. Once the electrode layers 120, 130 are coated onto the electrolyte layer 110, both of these layers 120, 130 are segmented by laser ablation in method steps 231 and 232 by removing portions of the anode layer 120 and the cathode layer 130. This results in cathode sections 132, 133, 134, 134 (exemplary and schematically four of them shown on the right side of Fig. 3), that are separated by segmentation rings 136 corresponding to the portions 136, where the cathode material 131 has been removed. Similarly, an equal number of anode sections (such as shown in Fig. 2; not explicitly shown in Fig. 3) are built by laser ablation of segmentation rings, wherein the segmentation rings of the anode layer 120 and the segmentation rings 136 of the cathode layer 130 are substantially opposite, and wherein the cathode sections 132, 133, 134, 135 are substantially opposite to the corresponding anode sections on the inner side 111 of the tube.

Laser ablation of the segmentation rings 136 is done by illuminating the portions 136 of the cathode section 130 (and of the anode section 120 on the inner or in general opposite side 111) with a laser and scanning the corresponding portions 136 with the laser beam. The laser may be operated in a continuous or pulsed mode of operation.

Laser intensity, pulse duration (where applicable), illumination angel, an any other laser parameters are chosen, such that the corresponding portions of the cathode layer 130 and the anode layer 120 are completely removed without substantially removing or damaging the electrolyte layer 110 at these locations. In general, these parameters depend on the materials used for the anode layer 120 and the cathode layer 130 as well as on their dimensioning and other paraments and need to be chosen according to the concrete application. Only as non-limiting examples, femtosecond and picosecond lasers can be used for precision ablation since they minimize thermal damage and help protect the underlying electrolyte. Nanosecond lasers can also be used but may induce more heat and thus thermal effects. Suitable wavelengths may, for example, include 532 nm (green) and 1064 nm (infrared) in Nd lasers. 355 nm UV lasers can be used for higher material absorption and finer ablation precision. Femtosecond lasers typically have a pulse duration of 10-300 fs. Picosecond lasers use pulse durations between 1-10 ps. Pulse durations of nanosecond lasers range from 1-100 ns. The pulse energy is usually between 10 µJ to 1 mJ, depending on the material and ablation depth. Suitable laser powers could range between 1 W to 50 W for pulsed lasers, if used (continuous lasers could be suitable, too). High repetition rates between 10 kHz to 500 kHz ensure consistent material removal and smooth ablation. The ablation depth typically ranges from a few micrometers per pulse, varying with material thickness. The focus of the laser beam can, for example, be between 10-120 µm, providing precision for fine feature ablation. The laser beam can, for example, scan the material at speeds between 100 mm/s to 2000 mm/s, depending on the speed/precision required. These parameters are only exemplary and need to be customized based on the material being ablated. The goal is to ablate the electrode without damaging the electrolyte layer.

Further, illumination duration may be time based in order to set the end point for laser ablation and/or, for example, if the corresponding electrode material 121, 131 and the electrolyte material 114 exhibit distinct emission spectra, the laser ablation processes of the portions of the anode layer 120 and the cathode layer 130 in steps 231, 232 may comprise monitoring the emission spectra in step 235 (which is performed concurrently with the laser ablation process) during laser ablation and stopping the laser ablation process when a change in the detected emission spectrum indicates the ablation process has reached the electrolyte layer 110 and therefore is complete. Such monitoring 235 may, for example, be done via an optical sensor (e.g., a CCD chip) that is arranged such that it can capture emissions from the ablation surface.

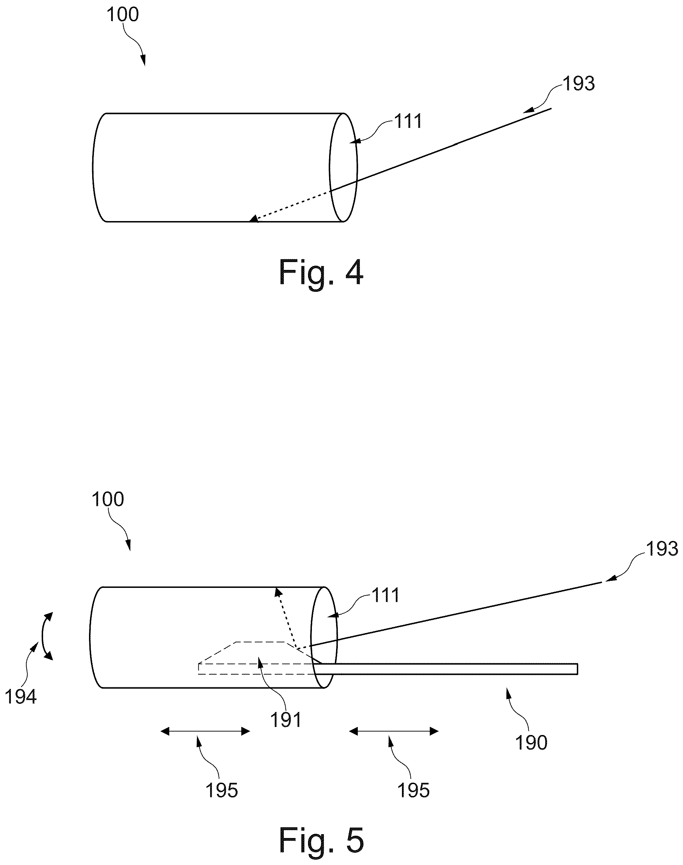

Fig. 4 illustrates a problem that may arise in laser ablation of portions of the electrode layer 120 or 130 (depending on the configuration) of the inner side 111 of a tubular fuel cell structure 100. Ideally, laser ablation is done by perpendicularly illuminating the corresponding portions with a laser beam 193. However, in particular when having small dimensions of the tube, this may be difficult to achieve because the laser beam 193 has to enter the tube at one of its end terminals. Therefore, the laser beam 193 can only illuminate the inner side 111 at a relatively flat angle.

Fig. 5 illustrates a solution for the problem described with regard to Fig. 4. A mirror 191 is mounted onto a carrier 190, such as a shaft. The carrier 190 with the mirror 192 can be inserted into the tube from the outside and can then be illuminated with the laser beam 193 from the outside under a relatively small angle, allowing to illuminate portions of the tube along the whole extension of the tube along a longitudinal direction 195 from one side of the tube while ensuring that the laser beam 193 impinges at the desired angle at the desired ablation surface (segmentation ring). The mirror 191 is angled, such that the laser beam 193 is redirected to the inner side 111 / surface of the tube at a steep angle. Depending on the angle of the mirror, the laser beam 193 can be directed into the tube at an angle or, ideally, parallel to the longitudinal extension of the tube. If, for example, the mirror surface, onto which the laser beam 193 impinges is 45 degree and the laser beam 193 is directed parallel to the longitudinal extension of tube, the laser beam impinges onto the inner side 111 / surface of the tube under a 90 degree angle. However, the angle, at which the laser beam 193 impinges onto the inner side 111 / surface of the tube may also be different and may, for example, be in the range between 5 degree and 175 degree, especially between 45 degree and 90 degree. Segmentations rings, as described herein, can then be ablated from the continuous anode layer 120 (or, in general, the electrode layer at the inner side 111 of the tube, as the anode layer 120 and cathode layer 130 may also be interchanged such that the cathode layer 130 is at the inner side 111) by either rotating the mirror 191 and carrier 190 or, preferably, the tube itself around the circumferential direction 194 and translating the tube along the longitudinal direction 195, to scan the corresponding portions to be removed with the laser beam 193, as described above. It is also possible to rotate and translate both, the tube and the mirror 191. It is only important to ensure relative movement of both components to each other. Further, segmentation rings may also be ablated by translating longitudinally and adjusting the incident angle of the laser beam 193. Any such combinations are conceivable.

Alternatively, an optical fiber having a cleaved end and/or a micro lens arranged at its end can be used for laser ablation, especially for the inner side of the tube, as described herein further above.

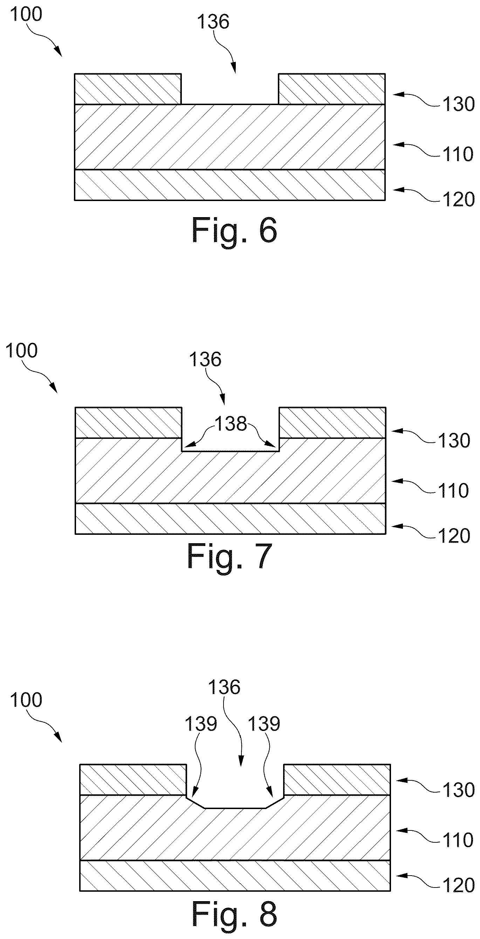

Figs. 6 to 8 show another problem that may arise when removing portions of the electrode layers 120, 130 by laser ablation in steps 231, 232 of the method 200 and a possible solution. Fig. 6 show the ideal situation, in which the laser ablation of a portion 136 / segmentation ring 136 of the cathode layer 130, in this example, stopped at exactly the right time, such that the portion 136 of the cathode layer 130 is fully removed while the electrolyte layer 110 stays fully intact.

However, in reality, such exact timing of the laser ablation process is difficult and there is at least some ablation of the electrolyte layer 110, too. This situation is shown in Fig. 7. Since the laser ablation usually occurs perpendicular (or at least substantially perpendicular), If some of the electrolyte layer 110 is removed, too, this may lead to sharp edges 138 which are mechanical weak points that decrease the mechanical stability of the electrolyte layer 110.

Fig. 8 shows a possible solution for the problem of Fig. 7. The problems arising from the sharp edge 138 of Fig. 7 may be avoided by softening these edges by appropriately controlling the laser. A laser used for laser ablation usually comprises a considerably smaller diameter than the width of the portion 136 / segmentation ring 136. The sharp edges 138 of Fig. 7 can then be avoided, for example, by using a "wobbling" laser beam and illuminating the edges with the laser beam for a shorter period of time than the center sections of the segmentation rings. This leads to deeper removal of material in the center sections than at the edges, thereby creating a more continuous transition at the edges, which results in softened edges 139. This reduces the risk of potential weak points that decrease mechanical stability. The laser may, during a first time interval in which the outer layers (meaning layers further above the electrolyte layer 110) are removed, uniformly illuminate the whole width of the segmentation rings 136. In a second time interval when reaching the end of the laser ablation process of the corresponding segmentation ring 136 (i.e., when coming closer to the electrolyte layer 110), illumination may be transitioned to the scheme described above, i.e., illuminating the edges with the wobbling laser for shorter time periods.

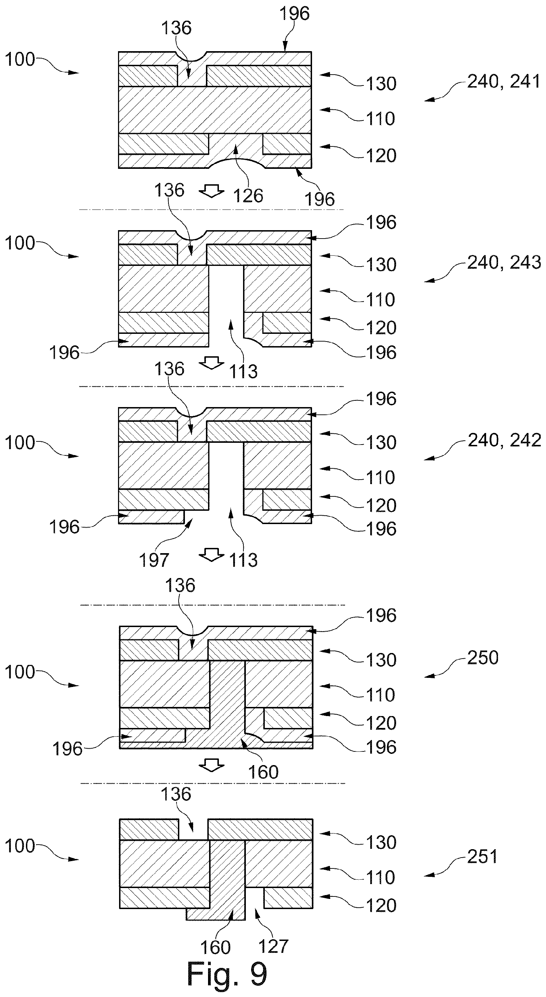

Fig. 9 show a schematic exemplary process flow for the method steps of creating through holes 113 in step 240 of method 200 and arranging an electrically conductive material 160 within the through holes 113 in method step 250.

Step 240, in this example, starts with sub-step 241 by coating the arrangement of the electrolyte layer 110, the segmented anode layer 120, and the segmented cathode layer 130 with a photoresist 196 (topmost part of Fig. 9). The photoresist 196 is a material sensitive to light or laser energy that helps to define where a laser will remove material when illuminated. Coating 241 with the photoresist 196 can be done by any suitable means, such as, for example, by dip coating (submerging the structure into the photoresist 196) or spray coating (spraying the photoresist 196 onto the structure).

Step 240, in the illustrated example, then proceeds with the sub-steps of laser drilling 243 the through holes 113 and structuring 242 the photoresist 196. It should be appreciated that steps 243 and 242 may also occur in reverse order, i.e., such that structuring 242 is done before laser drilling 243.

In step 243, the through holes 113 are drilled using a laser, as described above. This is illustrated in the second picture from the top of Fig. 9. The through holes 113 are drilled, such that the material of the electrolyte layer 110 is completely removed in the region of the through whole 113 but without removing/drilling or damaging the opposite electrode layer (in this example, the cathode layer 130), which may in some designs at least partly overlap the segmentation ring 126 of the electrode layer, from which side the through hole 113 is drilled (in this example the anode layer 120). For example, if the through hole 113 is drilled from the anode side, as shown, the corresponding segmentation ring 126 (or more generally "portion") at the anode side may be at least partially shifted from the corresponding segmentation ring 136 (or "portion") at the cathode side, such that the cathode layer 130 (i.e., a portion of one of the cathode sections) overlaps the segmentation ring 126 at the anode side. Laser drilling is then stopped, as soon as the electrode layer at the opposite side (here the cathode layer 130) is reached (which may be detected in the same way as described above with regard to the laser ablation, e.g., time based, based on emission spectra, etc.). However, the segmentation rings 126, 136 at the anode side and the cathode side may in some designs also be perfectly aligned. In this instance, the through holes 113 are laser drilled, until the photoresist 196 at the opposite side is reached.

The photoresist 196 is also used to define, where the conductive material 160, later arranged within the through holes (e.g., by galvanic deposition or PVD) attaches to the structure and stays there. This is done by structuring 242 the photoresist 196, as shown in the third picture from the top of Fig. 9. In particular, when parts of the conductive material 160 cover an intermediate thin layer of the photoresist 196 after galvanic deposition or PVD, when the photoresist 196 is later removed, removing the intermediate thin layer also removes the corresponding unwanted parts of the conductive material 160 covering this intermediate thin layer. Therefore, in order to define where the conductive material 160 should be present, the photoresist 196 is structured 242 using a laser, in order to define the regions, where the conductive material 160 is to be present and in order to avoid depositing the conductive material 160 onto regions, where it is not desired (e.g., to avoid short circuits between individual fuel cell segments). Structuring 242 means shaping the photoresist 196 by laser light or adjusting its absorption characteristics in order to define the corresponding regions. This is for example illustrated by the photoresist structuring area 197 of Fig. 9. **In** this area, the photoresist 196 has been removed by laser light, such that the electrically conductive material 160 can attach to the structure.

After structuring 242 the photoresist 196 and drilling the through hole(s) 113, method 200 may proceed with arranging the conductive material 160 within the through hole(s) 113 in step 250 (fourth picture from the top of Fig. 9). The conductive material may, for example, be arranged within the through hole by galvanic deposition for PVD, as described further above. The electrically conductive material then fills the through hole 113 and also partially covers the photoresist 196.

**In** a final step 251, the photoresist 196 is stripped from the arrangement, after arranging the conductive material 160 within the through holes 113. This can, for example be done chemically using acetone or any other suitable solvent or in any other suitable way. Stripping the photoresist 196 thereby also "washes away" the conductive material 160 from undesired regions, leaving the conductive material 160 designed exactly such that it interconnects neighboring anode sections and cathode sections without causing a short circuit, i.e., to interconnect neighboring fuel cell segments in series.

Fig. 10 shows an alternative for arranging the conductive material 160 within the through holes 113. Instead of filling up the whole through hole 113 with the conductive material 160, only the wall of the through hole 113 can be metallized. This is in particular facilitated if the wall of the through hole 113 is not perpendicular but has some conus/angle due to the nature of laser drilling. A PVD (physical vapor deposition) process such as sputtering or evaporation can be applied for deposition of metal on the side walls of the through hole 113. The thinner metal resulting in this way can have advantages with respect to durability to temperature cycles (less mechanical stress) and, thus, increase lifetime. The metallic layer (i.e., the conductive material 160) can be structured with a lift-off process described before or etched after it has been deposited using a masking process. Alternatively, the conductive material 160 can be removed where it is not needed with a maskless process by laser scribing (similar to laser trimming processes). If required, the through hole 113 can be filled afterwards e.g. with glass sealing to increase the gas tightness.

Fig. 11 shows a flowchart of the method 200 for manufacturing an electrolyte-supported fuel cell structure 100 already described in detail concurrently with the description of Figs. 1 to 10. Therefore, in the following, the corresponding method steps will only be described very briefly. The following description also still refers to Figs. 1 to 10.

The method 200 starts with providing 210 a continuous electrolyte layer 110, such as the one shown in Fig. 1.

The method 200 then proceeds with coating 221 a first side 111 of the electrolyte layer 110 with an anode material 121, to build a continuous anode layer 120, and coating 222 a second side 112 of the electrolyte layer 110 with a cathode material 131, to build a continuous cathode layer 130.

The method 200 then proceeds with removing portions 126 of the anode layer 120 by laser ablation and removing portions 136 of the cathode layer 130 by laser ablation. Steps 231 and 231 may be performed concurrently or consecutively. For tubular shapes of the electrolyte layer 110, and therefore of the fuel cell structure 100, in particular when removing the portions of the inner side of the tube (for example the portions 126 of the anode layer 120), a carrier-mirror arrangement 190, 191, as described herein above, or a cleaved fiber may be used for laser ablation (step 233: inserting carrier 190 with mirror 191 (or fiber); and step 234: illuminating mirror (or fiber) from the outside). Optionally, simultaneously during laser ablation (steps 231, 232), emission spectra may be monitored for end point detection, as described herein above in detail.

The method 200 then proceeds in step 240 with creating through holes 113 in the sections of the electrolyte layer 110, in which the portions of the anode layer 120 and the cathode layer 130 have been removed. Step 240 may comprise coating the arrangement with a photoresist (step 241), laser structuring the photoresist 196 (step 242), and laser drilling the through holes 113 (step 243), as described with regard to Fig. 9 above.

The method 200 then proceeds with arranging a conductive material 160 in the through holes 113 (e.g., by galvanic deposition or PVD), as described further above in detail, in step 250, and optionally concludes in step 251 with stripping the photoresist 196 (in embodiments, where a photoresist is used).

For the fuel cell structure 100 obtained by the method 200 described herein, most of the tube surfaces 111, 112 are to be covered by the electrodes (anode sections (e.g., 122, 123) and cathode sections (e.g., 132, 133, 134, 135)) and only small parts (the segmentation rings 126, 136) are without the electrode material. Therefore, the proposed subtractive process of laser ablation can be very suitable. However, for the electrical interconnection, the opposite situation holds: Only a very small part of the tube surface (or in general surface of the fuel cell structure) needs to be covered by the conductive material 160. Therefore, for the conductive material 160 providing the serial interconnection, an additive approach can be even better than the processes described above. A further alternative for arranging the conductive material 160 therefore may be printing the electrical interconnections using a 3D printing system such as aerosol jet or inkjet printing or paste dispensing. These methods can also be applied on tubes. Although herein mainly described for tubular structures, the methods described herein for segmentation and electrical interconnections can not only be applied to tubes but more general to gyroid structures. This has the advantage that not a large number of tubes need to be assembled to build a high power fuel cell system. Instead, only a few complex gyroid structures can be sufficient.

In tubular configurations, there is exactly one electrical contact for current collection on the inner tube wall and one on the outer tube wall. The ideas described herein for electrical interconnections between individual fuel cells of the fuel cell structure can also be used to bring the inner contact to the outer side of the tube. This can drastically simplify the electrical connection of individual tubular fuel cell structures 100. In this way, each tube end can be provided with one metallic ring on the outer side that so both electrodes can easily be contacted from the outside.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: electrolyte-supported fuel cell structure
- 110: electrolyte layer
- 111: first side (of electrolyte layer), inner side (of electrolyte layer)
- 112: second side (of electrolyte layer), outer side (of electrolyte layer)
- 113: through holes
- 114: electrolyte material
- 115: first section
- 116: second section
- 117: third section
- 118: fourth section
- 119: ablation section
- 120: anode layer
- 121: anode material
- 122: first anode section
- 123: second anode section
- 126: removed portions of the anode layer (segmentation rings)
- 127: anode gap
- 130: cathode layer
- 131: cathode material
- 132: first cathode section
- 133: second cathode section
- 134: third cathode section
- 135: fourth cathode section
- 136: removed portions of the cathode layer (segmentation rings)
- 137: cathode gap
- 138: sharp edges
- 139: softened edges
- 140: barrier layer
- 150: optical fiber
- 160: electrically conductive material
- 190: carrier
- 191: mirror
- 193: laser beam
- 194: circumferential direction
- 195: longitudinal direction
- 196: photoresist
- 197: photoresist structuring area

- 200: method
- 210: providing electrolyte layer
- 221: coating electrolyte layer with anode material
- 222: coating electrolyte layer with cathode material
- 231: partially removing anode layer
- 232: partially removing cathode layer
- 233: inserting carrier with mirror
- 234: illuminating mirror
- 235: monitoring emission spectra
- 240: creating through holes
- 241: coating arrangement with photoresist
- 242: laser structuring
- 243: laser drilling
- 250: arranging conductive material in through holes
- 251: stripping photoresist

## Claims

1. Method (200) for manufacturing an electrolyte-supported fuel cell structure (100), the method (200) comprising:
providing (210) a continuous electrolyte layer (110) having a first side (111) and a second side (112);
coating (221) the first side (111) of the continuous electrolyte layer (110) with an anode material (121), such that a continuous anode layer (120) at least partially covers the first side (111) of the electrolyte layer (110);
coating (222) the second side (112) of the continuous electrolyte layer (110) with a cathode material (131), such that a continuous cathode layer (130) at least partially covers the second side (112) of the electrolyte layer (110);
removing (231) portions of the anode layer (120) via laser ablation, such that at least a first anode section (122) and a second anode section (123) that are completely separated from each other but that are neighboring each other on the first side (111) of the electrolyte layer (110) are build;
removing (232) portions of the cathode layer (130) via laser ablation, such that at least a first cathode section (132) and a second cathode section (133) that are completely separated from each other but that are neighboring each other on the first side (111) of the electrolyte layer (110) are build;
creating (240) through holes (113) through the electrolyte layer (110) that at least partially coincide with areas, in which the anode layer (120) and/or the cathode layer (130) has been removed; and
arranging (250) a conductive material (160) within the through holes (113), such that the conductive material (160) connects the first anode section (122) with the second cathode section (133), or such that the conductive material (160) connects the second anode section (123) with the first cathode section (132), thereby building a serial connection between corresponding fuel cell segments.

2. The method (200) of claim 1, wherein providing the continuous electrolyte layer (110) comprises providing the continuous electrolyte layer (110) in a tubular shape building a tube having an inner side (111) and an outer side (112), wherein the first side (111) of the electrolyte layer (110) is the inner side (111) of the tube and wherein the second side (112) of the continuous electrolyte layer (110) is the outer side (112) of the tube or vice versa.

3. The method (200) of claim 2, wherein removing (231) the portions of the anode layer (120) and removing (232) the portions of the cathode layer (230) each occurs in at least one ring around the circumferential direction of the tube, such that the rings in which the anode layer (120) and the cathode layer (130) are removed are at least partially opposing each other on opposite sides of the tube.

4. The method (200) of claim 2 or 3, wherein removing (231, 232) the portions of the corresponding one of the anode layer (120) or the cathode layer (130) that is arranged at the inner side of the tube is performed by inserting (233) a carrier (190) having a mirror (191) mounted thereon into the tube and illuminating (234) the mirror with a laser beam (193);
wherein the mirror (191) is configured to direct the laser beam (193) onto the inner side of the tube at an incident angle between 5 degree and 175 degree.

5. The method (200) of any one of the preceding claims, wherein removing (231) the portions of the anode layer (120) and/or removing (232) the portions of the cathode layer (230) by laser ablation is stopped as soon as the electrolyte layer (110) is exposed, in order to at least largely avoid removal of material of the electrolyte layer (110).

6. The method (200) of any one of the preceding claims, wherein removing (231) the portions of the anode layer (120) and/or removing (232) the portions of the cathode layer (230) is performed for a predetermined period of time.

7. The method (200) of any one of the preceding claims, wherein the electrolyte layer (110) and the corresponding one of the anode layer (120) and the cathode layer (130) exhibit distinct emission spectra; and
wherein removing (231) the portions of the anode layer (120) and/or removing (232) the portions of the cathode layer (230), respectively, further comprises monitoring (235) the emission spectra during laser ablation and stopping the laser ablation process when a change in the detected emission spectrum indicates the ablation process has reached the electrolyte layer (110) and therefore is complete.

8. The method (200) of any one of the preceding claims, wherein removing (231, 232) the portions of the anode layer (120) or the cathode layer (130), respectively, is performed by scanning corresponding regions of the respective one of the anode layer (120) and the cathode layer (130) with a laser beam (193).

9. The method (200) of any one of the preceding claims, wherein creating (240) the through holes (113) through the electrolyte layer (110) is performed via laser drilling.

10. The method (200) of any one of the preceding claims, wherein creating (240) the through holes (113) through the electrolyte layer (110) comprises:
coating (241) the arrangement comprising the electrolyte layer (110), the anode layer (120), and the cathode layer (130) with a photoresist (196) by dip coating or spray coating after removing (231, 232) the portions of the anode layer (120) and the cathode layer (130);
laser structuring (242) the photoresist (196) on at least one of the sides of the arrangement; and
laser drilling (243) the through holes (113) on the at least one side of the arrangement that has been laser structured.

11. The method (200) of any one of the preceding claims, wherein arranging (250) the conductive material (160) within the through holes (113) is performed by galvanic deposition and/or physical vapor deposition, PVD.

12. The method (200) of any one of the preceding claim, wherein coating (221) the first side (111) of the electrolyte layer (120) with the anode material (121) and/or coating (222) the second side (112) of the electrolyte layer (120) with the cathode material (131) is carried out by slurry dip coating.

13. The method (200) of any one of the preceding claims, further comprising coating (223) the first side (111) and/or the second side (112) of the electrolyte layer (110) with a barrier layer (140) prior to coating (221, 222) the corresponding one of the first side (111) and the second side (112) with the anode material (121) or the cathode material (131), respectively.

14. The method (200) of any one of the preceding claim, wherein the laser ablation is adjusted so as to soften edges at the end of the laser ablation processes, in order to avoid or at least reduce mechanical stress in the electrolyte layer (110).

15. The method (200) of any one of the preceding claims, wherein removing (231, 232) the portions of the anode layer (120) and/or the cathode layer (130) is carried out by directing a laser beam (193) onto the corresponding surface via an optical fiber (150) having a cleaved end and/or a micro lens arranged at its end.
